# EUROPÄISCHE PATENTANMELDUNG

(11) **EP 2 219 268 A1**
(43) Veröffentlichungstag der Anmeldung: **18.08.2010**
(21) Anmeldenummer: 09153036.0
(22) Anmeldetag: 17.02.2009
(51) Int. Cl.: H01R 4/18, H01R 43/02, B23K 20/10

(54) **Verbindungselement sowie Verfahren und Vorrichtung zum Ultraschallschweissen**

(71) Anmelder: Telsonic Holding AG, 9552 Bronschhofen (CH)
(72) Erfinder: Lang, Georg, 97855 Tiefenstein (DE); Spenger, Peter, 8640 Hurden (CH)
(74) Vertreter: Welch, Andreas

(57) **Zusammenfassung**

Die vorliegende Erfindung ist gerichtet auf ein Verbindungselement (1) zur Aufnahme eines Kabels (32) enthaltend zumindest einen biegbaren Schweissbereich. Der Schweissbereich ist derart ausgebildet, dass dieser in einer Ebene parallel zur Längsachse des Kabels (32) zu Schwingungen anregbar ist. Somit wird Ultraschallschweissen zwischen Schweissbereich und Kabel (32) ermöglicht.

## Beschreibung

Die Erfindung betrifft ein Verbindungselement, eine Vorrichtung zum Ultraschallschweissen, ein Verfahren zum Ultraschallschweissen und die Verwendung des Verbindungselements mit den Merkmalen der Oberbegriffe der unabhängigen Ansprüche.

Aus dem Stand der Technik ist es bekannt, Kupferkabel mit einem Verbindungselement wie beispielsweise einem Kabelschuh, einem Stecker oder einer Steckerbuchse zu verbinden. Dabei wird das Kupferkabel in das Verbindungselement eingeführt, woraufhin Laschen des Verbindungselements umgebogen werden zur Einklemmung des Kupferkabels. Diese Art der Verbindung wird auch crimpen genannt. Somit wird eine zuverlässige elektrische Kontaktierung und eine mechanische Verbindung zwischen Kupferdraht und Verbindungselement erreicht.

Bei der Kontaktierung von Aluminiumdrähten anstelle von Kupferdrähten mit einem Verbindungselement tritt allerdings das Problem der Oxidation von Aluminium auf. Bei der Einführung eines Aluminiumkabels in ein Verbindungselement und anschliessendem Umbiegen der Laschen zur elektrischen Kontaktierung verhindert eine sich auf der Oberfläche des Aluminiumkabels befindende Oxidschicht einen guten elektrischen Kontakt zwischen Aluminiumkabel und Verbindungselement. Selbst bei erfolgreicher elektrischer Kontaktierung kann durch weitere Oxidation des Aluminiums dieser Kontakt mit der Zeit wieder verschlechtert oder sogar unterbrochen werden.

Die US 3,717,842 offenbart eine Methode zur Kontaktierung von Aluminiumdrähten mit Verbindungselementen. Ein Aluminiumkabel wird in das Verbindungselement eingeführt, woraufhin Laschen umgebogen werden zur Kontaktierung des Aluminiumkabels. Anschliessend wird der Bereich mit den umgebogenen Laschen mit Ultraschall in Längsachse des Kabels beaufschlagt. Gemäss der Offenbarung kann damit eine sich auf dem Aluminiumkabel befindende Oxidschicht entfernt werden sowie der Aufbau einer zusätzlichen Aluminiumoxidschicht verhindert werden.

In der DE 10 2007 026 707 B3 ist ein Verfahren zum elektrisch leitenden Verbinden von Aluminiumlitzen sowie eine entsprechende Ultraschallschweissvorrichtung offenbart. Eine Sonotrode weist hier eine Schweissfläche mit trapezförmigem Querschnitt auf. Die Sonotrode steht in direktem Kontakt mit den Aluminiumlitzen, die durch die Sonotrode in Längsachse der Aluminiumlitzen mit Ultraschall beaufschlagt werden. Dadurch werden die Litzen untereinander und / oder mit einem Träger verschweisst.

Nachteilig ist hier aber bei der Beaufschlagung des Verbindungselements mit Ultraschall die fehlende Möglichkeit einer relativen Schwingung zwischen zumindest einem Teil des Verbindungselements und dem Aluminiumkabel oder den Litzen des Aluminiumkabels. Somit kann die Oxidschicht nicht zuverlässig im Bereich der Kontaktfläche entfernt werden. Weiterhin kann mit diesem Verfahren keine intermetallische Verbindung zwischen Verbindungselement und Aluminiumkabel zuverlässig hergestellt werden. Die mechanische Festigkeit ist daher nicht ausreichend. Dadurch wird der spätere Aufbau einer Oxidschicht zwischen Verbindungselement und des Aluminiumkabels nicht zuverlässig verhindert.

Die Verwendung von Aluminiumkabeln, die eine geringere Massendichte als z.B. Kupferkabel aufweisen, ist aber besonders in der Automobilindustrie zur Gewichtsreduktion von Fahrzeugen relevant. Gleichzeitig werden in der Automobilindustrie aber hohe Anforderungen an die Zuverlässigkeit von elektrischen Verbindungen auf Grund von Sicherheitsanforderungen gestellt.

Es ist daher eine Aufgabe der vorliegenden Erfindung, die Nachteile des Bekannten zu vermeiden, insbesondere also ein Verbindungselement sowie ein Verfahren und eine Vorrichtung zur Verbindung des Verbindungselements mit einem Kabel bereitzustellen, welche eine gute mechanische und elektrische Verbindung erzeugen. Insbesondere soll bei Kabeln aus stark oxidierendem Material die Oxidschicht auf dem Kabel zumindest teilweise verhindert oder entfernt werden und eine intermetallische Verbindung zwischen Verbindungselement und Kabel erzielt werden können.

Diese Aufgaben werden durch ein neues Verbindungselement sowie ein neues Verfahren und eine neue Vorrichtung zur Verbindung des Verbindungselements mit einem Kabel entsprechend den Merkmalen des kennzeichnenden Teils der unabhängigen Ansprüche gelöst.

Das erfindungsgemässe Verbindungselement enthält einen in eine Kabelaufnahme umformbaren Bereich zur Aufnahme eines Kabels parallel zur Längsachse des Kabels und zumindest einen biegbaren Schweissbereich. Der Schweissbereich ist derart ausgebildet, dass dieser in einer Ebene parallel zur Längsachse des Kabels zu Schwingungen anregbar ist. Somit wird Ultraschallschweissen zwischen Schweissbereich und Kabel ermöglicht. Bei vollflächigen Schweissbereichen wie z.B. gemäss US 3,717,842 ist eine Schwingungseinleitung in der Ebene parallel zur Kabelachse nicht möglich.

Als Kabel werden im Sinne der Anmeldung Kabel bestehend aus einer Litze, aus mehr als einer Litze, einzelne Drähte sowie elektrisch leitende Seile verstanden. Ein Kabel kann im Sinne der Anmeldung aber auch ein Terminal sein, d.h. eine starre elektrische Verbindung.

Durch diese Schwingungen des Schweissbereichs wird also die auf dem Kabel und / oder dem Verbindungselement sich befindende Oxidschicht zumindest teilweise entfernt und es kann eine intermetallische Verbindung zwischen dem Kabel und dem Schweissbereich erzielt werden. Die Entfernung der sich auf dem Kabel befindenden Oxidschicht erfolgt durch die Anregung des Schweissbereichs in einer Ebene parallel zur Längsachse des Kabels mindestens teilweise durch mechanischen Abrieb aufgrund der relativen Bewegung zwischen Schweissbereich und Kabel.

Die Anregung zu Ultraschallschwingungen des Schweissbereichs kann z.B. durch eine Sonotrode erfolgen, die im Wesentlichen parallel zur Längsachse des Kabels schwingt. Eine weitere Möglichkeit ist z.B. die Verwendung einer Sonotrode, die zu Torsionsschwingungen in einer Ebene parallel zur Längsachse des Kabels angeregt wird.

Als Material für das Verbindungselement werden insbesondere leitende Metalle, insbesondere Buntmetalle, und/oder Metalllegierungen verwendet.

Als verwendbare Materialien für das Verbindungselement eignen sich unter anderem Aluminium, Kupfer, Messing und / oder auch Nickel.

Der Schweissbereich ist im nicht umgebogenen Zustand radial zur Längsachse des im Verbindungselement aufgenommenen Kabels ausgebildet.

Bevorzugt weist das Verbindungselement im Schweissbereich mindestens eine Lasche auf.

Die Lasche ist vorteilhaft so geformt, dass sie eine geringere Trägheit und Steifigkeit in Bezug auf Auslenkungen in einer Ebene parallel zur Längsachse des Kabels gegenüber vorbekannten Laschen aus dem Stand der Technik aufweist. Dies führt zu einer ausreichenden Anregbarkeit der Lasche mit Ultraschallschwingungen in der Richtung des Kabels. Damit werden die Entfernung der Oxidschicht auf dem Kabel sowie die Bildung einer intermetallischen Verbindung zwischen Lasche und Kabel ermöglicht.

Besonders bevorzugt weist das Verbindungselement Laschen auf, die eine Laschenlänge senkrecht zur Längsachse haben, die grösser ist als eine Laschenbreite parallel zur Längsachse des Kabels.

Diese konstruktive Ausgestaltung der Lasche verbessert die Anregbarkeit der Lasche mit Ultraschallschwingungen und ermöglicht die Anpassung der Lasche an die jeweiligen Erfordernisse. Bei z.B. vorgegebener Kontaktfläche zwischen Lasche und Kabel wird also die zum Ultraschallschweissen erforderliche Anregbarkeit der Lasche durch die vorgegebene Dimensionierung der Lasche ermöglicht.

In einer bevorzugten Ausführungsform weist der Schweissbereich mindestens zwei Laschen auf. Bevorzugt hat der Schweissbereich drei Laschen, besonders bevorzugt vier Laschen und ganz besonders bevorzugt mindestens vier Laschen.

Die Anzahl der Laschen des Schweissbereichs beeinflusst die Grösse der Kontaktfläche zwischen Schweissbereich und Kabel. Durch Verwendung mehrerer Laschen kann die Kontaktfläche vergrössert werden und gleichzeitig jede Lasche für die Anregbarkeit mit Ultraschall optimiert werden.

Vorteilhaft weist das Verbindungselement einen Laschenabstand zwischen zwei Laschen auf, der gleich gross und/oder grösser als die Laschenbreite ist.

Diese Ausgestaltung des Schweissbereichs aus Laschen hat den Vorteil, dass die zur Schwingung angeregten Laschen axial zum Kabel frei schwingen können, da diese sich nicht gegenseitig berühren. Die Anregbarkeit zu Schwingungen wird also nicht durch die Nachbarlaschen negativ beeinflusst.

Üblicherweise werden die Laschen beim Ultraschallschweissen axial zum Kabel beispielsweise zu Schwingungen mit einer Amplitude zwischen 40 µm und 100 µm angeregt. Somit können die Laschen in diesem Fall fast aneinander anliegen.

Weiterhin besonders bevorzugt, weist das Verbindungselement mindestens zwei Schweissbereiche auf, besonders bevorzugt genau zwei sich gegenüberliegende Schweissbereiche.

Die Verwendung von mindestens zwei Schweissbereichen hat den Vorteil, dass das Verbindungselement an die Erfordernisse bezüglich Einklemmung des Kabels und Kontaktfläche optimal angepasst werden kann.

Die Schweissbereiche sind im nicht umgebogenen Zustand radial zur Längsachse des im Verbindungselement aufgenommenen Kabels ausgebildet. Besonders bevorzugt sind diese im nicht umgebogenen Zustand sich radial zur Längsachse gegenüberliegend ausgebildet. In einer besonders bevorzugten Ausführungsform sind die mindestens zwei Schweissbereiche so geformt, dass sie ineinander eingreifen, wenn sie umgebogen sind. Insbesondere greifen die Laschen der Schweissbereiche im Wesentlichen formschlüssig ineinander, wenn sie umgebogen sind, vorzugsweise ohne sich jedoch zu kontaktieren. Die Laschenbreite kann z.B. etwas kleiner ausgebildet als der Abstand zwischen den Laschen.

Diese konstruktive Ausgestaltung hat den Vorteil einer kompakten Bauweise des Verbindungselements bei optimierter Kontaktfläche zwischen Schweissbereich und Kabel.

Die Schweissbereiche und / oder die Laschen der Schweissbereiche greifen hier im umgebogenen Zustand so ineinander, dass diese zu Schwingungen mit Ultraschallschweissen anregbar sind. Die Anregbarkeit kann z.B. dadurch erreicht werden, dass die Schweissbereiche sich im umgebogenen Zustand vorzugsweise nicht berühren.

Das Verbindungselement kann zwischen zwei Laschen einen Laschenabstand aufweisen, der kleiner als die Laschenbreite ist.

In einer weiteren besonders bevorzugten Ausführungsform ist der biegbare Schweissbereich um ein Kabel umwickelbar ausgebildet.

Im umwickelten Zustand nimmt der Schweissbereich das Kabel auf. Dies stellt also eine Kabelaufnahme dar.

Insbesondere bevorzugt ist der biegbare Schweissbereich um ein Kabel mindestens einmal, bevorzugt mindestens zweimal, ganz besonders bevorzugt zumindest dreimal umwickelbar ausgebildet.

Weiter besonders bevorzugt ist ein Wicklungsabstand parallel zur Längsachse des Kabels wählbar.

Die Umwicklung des Kabels durch den Schweissbereich kann also so ausgebildet sein, dass sich die einzelnen Wicklungen berühren, d.h. es ist kein Wicklungsabstand vorhanden. Es ist aber auch möglich, dass die Wicklungen parallel zur Längsachse des Kabels einen Wicklungsabstand aufweisen.

Ein weiterer Aspekt der Erfindung betrifft ein Kabel, das mit einem Verbindungselement mittels Ultraschallschweissen verbunden ist. Der Schweissbereich des Verbindungselements ist also mit dem Kabel verbunden.

Kabel können wie oben beschrieben auch mehrere Litzen aufweisen, aus denen das Kabel zusammengesetzt ist. In diesem Fall steht der Schweissbereich nur mit den äusseren Litzen des Kabels in Kontakt, wodurch nur mit den äusseren Litzen eine Verbindung zwischen Schweissbereich und Kabel stattfindet.

Besonders bevorzugt ist das Kabel ein Metallkabel, insbesondere ein Aluminiumkabel.

Als Kabelmaterialien eignen sich unter anderem Buntmetall, Aluminium, Kupfer, Nickel und / oder auch Messing.

Weiter besonders bevorzugt ist eine Ummantelung des Kabels in dem Verbindungselement eingeklemmt.

Die Einklemmung der Ummantelung des Kabels hat den Vorteil, dass bei mechanischer Belastung senkrecht und / oder parallel zur Kabelachse des Kabels die Ummantelung weniger leicht wegrutscht. Durch dieses Wegrutschen der Ummantelung könnten Kurzschlüsse verursacht werden. Weiterhin wird das Kabel durch die fixierte Ummantelung axial so stabilisiert, dass die Wahrscheinlichkeit eines Kabelbruchs verringert wird.

Die Erfindung betrifft weiter eine Vorrichtung zum Ultraschallverschweissen eines Verbindungselements mit einem Kabel. Die Vorrichtung enthält eine Sonotrode und eine Führung für die Sonotrode. Die Sonotrode ist derart ausgebildet und führbar, dass ein Schweissbereich des Verbindungselements mittels der Sonotrode so umbiegbar ist, dass ein Kabel im Verbindungselement einklemmbar ist.

Diese erfindungsgemässe Vorrichtung zum Ultraschallschweissen enthält vorzugsweise zusätzlich einen derart ausgebildeten Schieber, dass der Schweissbereich des Verbindungselements mittels der Sonotrode so umbiegbar ist, dass ein Kabel im Verbindungselement einklemmbar ist.

Der Schweissbereich kann also nur mittels der Sonotrode, nur mittels des Schiebers oder mit Sonotrode und Schieber umgebogen werden.

Diese Ausführungsform hat den Vorteil, dass nur eine Vorrichtung zum Umbiegen des Schweissbereichs und zum Ultraschallverschweissen eines Verbindungselements mit einem Kabel benötigt wird.

Die Vorrichtung weist dabei eine Positioniervorrichtung mit einer Führung für die Sontrode auf. Somit lässt sich die Position der Sonotrode in der Vorrichtung entsprechend steuern, um den Schweissbereich umzubiegen. Hierzu eignen sich z.B. dem Fachmann bekannte lineare Antriebe, Spindelantriebe oder auch Schwenkvorrichtungen. Diese Antriebe werden durch die Positioniersteuerung so gesteuert, dass die Sonotrode eine entsprechende Bewegung ausführt zur Umbiegung der Schweissbereiche, wobei die Sonotrode in Kontakt mit dem Schweissbereich steht.

Weiter bevorzugt ist die Sonotrode in einer Ebene im Wesentlichen parallel zur Achse einer Kabelaufnahme zu Ultraschallschwingungen anregbar.

Zur Verbesserung der Ultraschallschweissverbindung zwischen Kabel und Verbindungselement wird die Sonotrode in einer Ebene im Wesentlichen parallel zur Achse der Kabelaufnahme zu Ultraschallschwingungen angeregt. Diese Achse der Kabelaufnahme ist im Wesentlichen parallel zur Kabelachse.

Die Sonotrode kann also z.B. im Wesentlichen parallel zur Achse der Kabelaufnahme angeregt werden oder auch zu torsionalen Schwingungen in einer Ebene im Wesentlichen parallel zur Achse der Kabelaufnahme, z.B. mit einer Vorrichtung wie in der WO2008/068281 gezeigt.

Ganz besonders bevorzugt weist die Vorrichtung eine zum Ultraschallschweissen verwendbare Kontaktfläche der Sonotrode auf, die senkrecht zu der Sonotrodenachse konkav ausgebildet ist.

Diese konstruktive Ausgestaltung der Kontaktfläche der Sontorode hat den Vorteil, dass bei der Kontaktierung zwischen Sonotrode und Verbindungselement zum Ultraschallschweissen die Kontaktfläche zwischen Sonotrode und Verbindungselement vergrössert wird. Dies führt zu einer verbesserten Ultraschallübertragung von der Sonotrode auf das Verbindungselement. Hierdurch wird der Vorgang des Ultraschallschweissens durch bessere Energieübertragung verbessert. Somit lässt sich das Ultraschallschweissen beschleunigen und/oder eine bessere Verschweissung zwischen Kabel und Verbindungselement erreichen.

Zudem ermöglicht diese Form der Kontaktfläche der Sontorode eine laterale Stabilisierung des Verbindungselements z.B. während des Schweissvorgangs.

Die Erfindung betrifft weiter ein Verfahren zum Verbinden eines Kabels mit einem Verbindungselement, welches zumindest einen biegbaren Schweissbereich enthält. Dieses Verbindungselement ist insbesondere wie vorstehend beschrieben ausgebildet. Das Verfahren beinhaltet die folgenden Schritte:
Zuerst wird das Kabel in dem Verbindungselement durch Umbiegen des Schweissbereichs eingeklemmt. Danach wird eine intermetallische Verbindung zwischen dem Verbindungselement und dem Kabel durch Anregung des Schweissbereichs mittels Ultraschall erzeugt. Die Anregung des Schweissbereichs erfolgt im Wesentlichen in einer Ebene parallel zu einer Längsachse des Kabels. Weiterhin wird der Schweissbereich zu Ultraschallschwingungen angeregt durch Kontaktierung des Schweissbereichs mit einer Kontaktfläche einer Sonotrode.

Mit diesem Verfahren lassen sich zuverlässige Verbindungen zwischen einem Verbindungselement und einem Kabel herstellen, insbesondere wenn dieses Kabel eine oxidierende Oberfläche aufweist. Dieses Verfahren wird vorteilhaft angewendet bei der Verbindung von Verbindungselementen mit Aluminiumkabeln.

Besonders bevorzugt wird bei dem Verfahren das Verbindungselement zum Einklemmen des Kabels mittels der Sonotrode umgebogen.

Dieser Verfahrensschritt wird vor dem Ultraschallschweissen durchgeführt. Dies hat den Vorteil, dass alle Schritte des Verfahrens in einer Vorrichtung durchgeführt werden können.

Die Erfindung betrifft weiter eine Verwendung eines Verbindungselements zum Ultraschallverschweissen eines Schweissbereichs mit einem Kabel. Die Anregung des Schweissbereichs zu Schwingungen erfolgt im Wesentlichen in einer Ebene parallel zur Längsachse des Kabels.

Diese Verwendung eines Verbindungselements geschieht besonders bevorzugt mit einem Verbindungselement gemäss den Verbindungselementansprüchen der vorliegenden Erfindung.

Die vorstehend beschriebenen erfindungsgemässen Ausführungsformen sind nicht beschränkt auf die einseitige Beaufschlagung des jeweiligen Verbindungselements mit Ultraschall zum Ultraschallschweissen. Ein gegenüberliegender Amboss, auf dem das Verbindungselement zumindest während des Ultraschallschweissens aufliegt oder von diesem aufgenommen wird, kann vorteilhaft ebenfalls mit Ultraschallschwingungen beaufschlagt werden. Vorzugsweise ist dieser in zur Schwingung der Sonotrode gegenläufige Ultraschallschwingungen versetzbar.

Die Erfindung wird nachstehend anhand von Ausführungsbeisielen und Zeichnungen zum besseren Verständnis erläutert. Es zeigen:
- Figur 1: Draufsicht auf ein erfindungsgemässes Verbindungsele- ment mit Kabel und Sonotrode
- Figur 2a: Draufsicht auf das Verbindungselement gemäss Figur 1 im nicht umgebogenen Zustand mit einem Kabel
- Figur 2b: Perspektivische Ansicht des erfindungsgemässen Ver- bindungselements gemäss Figur 2a in teilweise umgebo- genem Zustand
- Figur 2c: Draufsicht auf das erfindungsgemässe Verbindungsele- ment der Figur 2a in vollgeständig umgebogenem Zu- stand
- Figur 3a: Draufsicht auf eine alternative Ausführungsform des Verbindungselements mit einem Kabel
- Figur 3b: Draufsicht auf ein Verbindungselement gemäss Figur 3a in umgebogenem Zustand
- Figur 4a: Draufsicht auf eine zusätzliche erfindungsgemässe Ausführungsform des Verbindungselements mit einem Ka- bel
- Figur 4b: Draufsicht auf ein erfindungsgemässes Verbindungsele- ment gemäss Figur 4a in umgebogenem Zustand
- Figur 5a: Draufsicht auf eine weitere alternative Ausführungs- form des Verbindungselements mit Kabel
- Figur 5b: Draufsicht auf ein erfindungsgemässes Verbindungsele- ment gemäss Figur 5a in umgebogenem Zustand
- Figur 6a: Draufsicht auf noch eine alternative Ausführungsform des Verbindungselements mit Kabel und Sonotrode
- Figur 6b: Seitenansicht eines erfindungsgemässen Verbindungs- elements entlang der Kabelachse des Kabels gemäss Fi- gur 6a mit Sonotrode
- Figur 6c: Draufsicht auf ein erfindungsgemässes Verbindungsele- ment gemäss Figur 6a in umgebogenem Zustand mit Kabel und Sonotrode
- Figur 7: Seitenansicht einer Sonotrode mit konkaver Kontakt- fläche
- Figur 8: Draufsicht auf ein weiteres erfindungsgemässes Ver- bindungselement mit einem Kabel mit Ummantelung
- Figur 9a: Draufsicht auf eine alternative erfindungsgemässe Ausführungsform des Verbindungselements mit einem um- wickelbaren Schweissbereich
- Figur 9b: Draufsicht auf die Ausführungsform des Verbindungs- elements gemäss Figur 9a mit umwickeltem Kabel
- Figur 9c: Draufsicht auf die Ausführungsform des Verbindungs- elements gemäss Figur 9a mit umwickeltem Kabel mit alternativem Wicklungsabstand

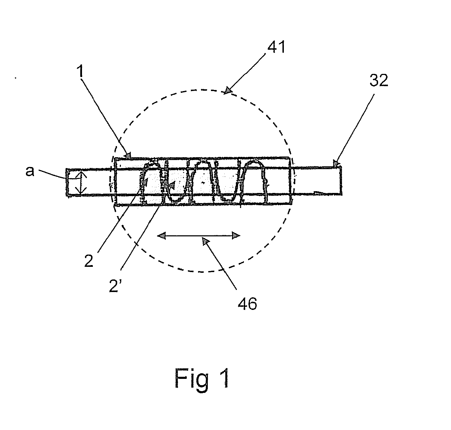

Figur 1 zeigt in einer Draufsicht ein erfindungsgemässes Verbindungselement 1 mit zwei umgebogenen Laschen 2' beziehungsweise drei umgebogenen Laschen 2 auf den Seiten des Verbindungselements. In dem Verbindungselement 1 ist durch die Laschen 2, 2' ein Aluminiumkabel 32 mit einem Durchmesser a von 1,5 mm eingeklemmt. Die Laschen 2, 2' sind dabei so auf das Kabel 32 gepresst, dass dieses in seiner Position im Wesentlichen in Bezug auf Zugbelastung entlang der Achse des Kabels fixiert ist. Die Laschen 2, 2' sind hier so ausgebildet, dass diese in umgebogenem Zustand formschlüssig ineinander eingreifen. Die benachbarten Laschen 2 und 2' haben jedoch einen Abstand im umgebogenen Zustand, der grösser ist als das zweifache der Amplitude der Schwingungen der Laschen 2, 2', die mit einer Sonotrode 41 erzeugt werden parallel zur Schwingungsrichtung 46. Dadurch können die Laschen 2, 2' durch die Sonotrode 41 zu Schwingungen zum Ultraschallschweissen angeregt werden.

Die Sonotrode 41 wird zu Ultraschallschwingungen parallel zur Schwingungsrichtung 46 angeregt und überträgt diese Schwingungen auf die Laschen 2, 2'. Die Laschen 2, 2' schwingen nun in Relation zum Aluminiumkabel 32, wodurch eine sich eventuell auf dem Aluminiumkabel 32 befindliche Oxidschicht mindestens im Kontaktbereich zwischen Laschen 2, 2' und Aluminiumkabel 32 entfernt wird und eine intermetallische Verbindung zwischen den Laschen 2, 2' und dem Aluminiumkabel 32 gebildet wird. Dadurch wird eine zuverlässige und dauerhafte Kontaktierung zwischen Verbindungselement 1 und Aluminiumkabel 32 erzielt.

Aus zeichnerischen Gründen ist die Sonotrode 41 strichliert dargestellt, um kenntlich zu machen, dass die Sonotrode 41 ansonsten zumindest teilweise das Verbindungselement 1 verdecken würde.

Alternativ kann anstelle des Aluminiumkabels 32 auch ein aus Litzen bestehendes Aluminiumkabel 32 verwendet werden.

Die Länge des Kabels 32 ist hier nur schematisch angegeben. Das Kabel 32 kann z.B. entlang der Längsachse des Kabels 32 einseitig entsprechend den Anforderungen verlängert werden und auf der anderen Seite verkürzt werden und somit z.B. im Verbindungselement 1 enden. Dies gilt von hier an und im Folgenden für alle weiteren Ausführungsbeispiele.

Das Aluminiumkabel 32 kann Durchmesser a zwischen 0,35 mm und 20 mm aufweisen, d.h. also eine Querschnittsfläche zwischen ca. 0,1 mm² und ca. 300 mm². Die Querschnittsfläche kann z.B. kreisförmig, Ellipsoid oder auch rechteckig sein.

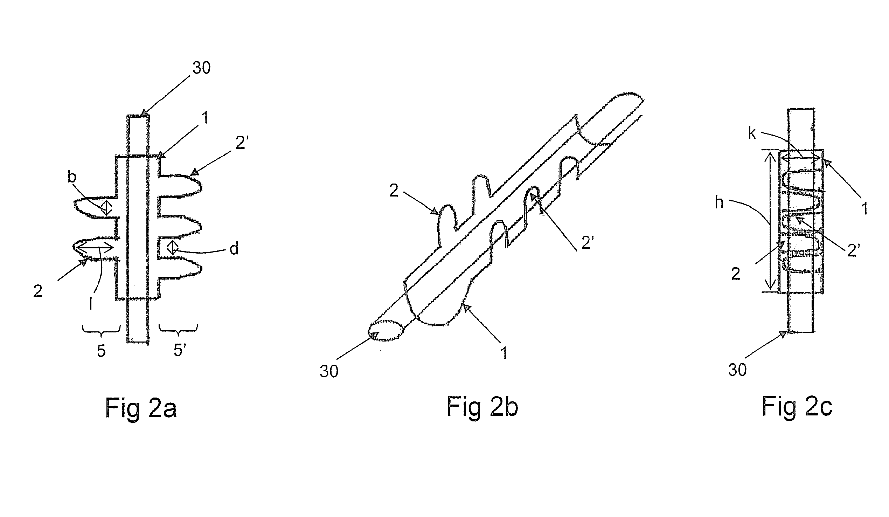

Figur 2a zeigt eine Draufsicht auf eine erste Form eines erfindungsgemässen Verbindungselements 1 in umgebogenem Zustand mit einem Kabel 30. Das Verbindungselement weist zwei Schweissbereiche 5 und 5' auf. Der erste Schweissbereich 5 weist zwei Laschen 2 und der zweite Schweissbereich 5' weist drei Laschen 2' auf.
Die Laschen 2, 2' haben eine Laschenbreite b parallel zur Längsachse des Kabels 30 und eine Laschenlänge 1 senkrecht zur Längsachse des Kabels 30. Die Laschen 2, 2' sind durch einen Laschenabstand d voneinander beabstandet.

Alternativ kann anstelle des Kabels 30 auch ein aus Litzen bestehendes Aluminiumkabel verwendet werden.

Die Laschenbreite b kann beispielsweise im Bereich von 0,5 mm bis 6mm liegen und die Laschenlänge im Bereich von ca. 5 mm bis 20 mm. Der Laschenabstand d kann beispielsweise im Bereich von 0,01 mm bis 10 mm.

In Figur 2b ist das erfindungsgemässe Verbindungselement 1 gemäss Figur 2a in perspektivischer Darstellung dargestellt. Das Kabel 30 ist in das Verbindungselement 1 eingeführt zur Herstellung einer Kontaktierung zwischen dem Kabel 30 und dem Verbindungselement 1. Die Laschen 2, 2' des Verbindungselements 1 sind hier teilweise umgebogen. Diese Position der Laschen 2, 2' stellt eine Zwischenposition dar vor der vollständigen Umbiegung der Laschen 2, 2'.

In Figur 2c ist eine Draufsicht auf das Verbindungselement 1 gemäss Figur 2a dargestellt. Die Laschen 2 befinden sich hier jedoch in einem umgebogenen Zustand zur Einklemmung des Kabels 30. Die Laschen 2, 2' der Schweissbereiche greifen etwa ineinander ein. Die benachbarten Laschen 2 und 2' haben jedoch einen Abstand im umgebogenen Zustand, der grösser ist als das zweifache der Amplitude der Schwingungen der Laschen 2, 2'. Das Verbindungselement 1 hat hier eine Breite k und eine Länge h.

Die Breite k des Verbindungselements kann beispielsweise im Bereich von ca. 3 mm bis ca. 20 mm liegen und die Länge h des Verbindungselements im Bereich von ca. 5 mm bis ca. 20 mm.

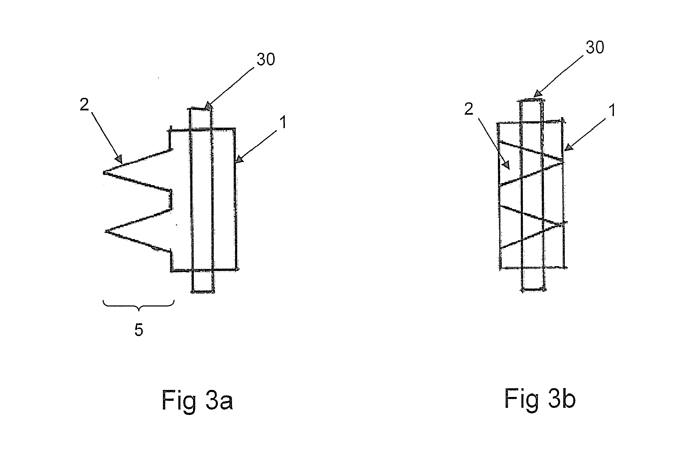

In Figur 3a ist eine weitere alternative Ausführungsform des Verbindungselements 1 dargestellt. In dem Verbindungselement befindet sich ein Kabel 30. Weiter weist das Verbindungselement den Schweissbereich 5 mit dreieckigen Laschen 2 auf. Diese Laschen sind hier noch nicht umgebogen.

Alternativ kann anstelle des Kabels 30 auch ein aus Litzen bestehendes Kabel 30 verwendet werden.

In Figur 3b ist das Verbindungselement 1 der Figur 3a in umgebogenem Zustand dargestellt. Die dreieckigen Laschen 2 stehen also in direktem Kontakt mit dem Kabel 30 und üben derart eine Kraft auf dieses Kabel 30 auf, dass dieses in seiner Position fixiert wird.

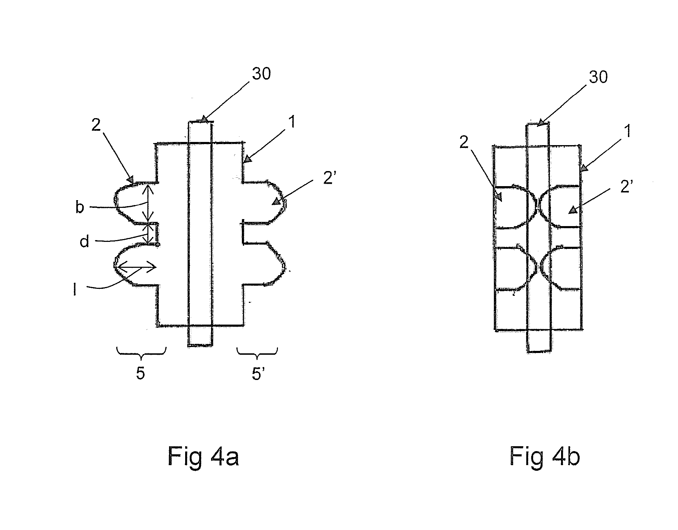

In Figur 4a ist in einer Draufsicht eine zusätzliche alternative Ausführungsform des Verbindungselements 1 dargestellt. Dieses Verbindungselement 1 weist zwei Schweissbereiche 5, 5' auf, die jeweils zwei Laschen 2, 2' aufweisen. In das Verbindungselement 1 ist ein Kabel 30 eingelegt. Die Laschen 2, 2' der Schweissbereiche 5, 5' weisen eine Laschenbreite b und eine Laschenlänge 1 auf. Die Laschen 2, 2' haben hier einen Laschenabstand d, der kleiner ist als die Laschenbreite b.

In Figur 4b ist eine Draufsicht des Verbindungselements 1 gemäss Figur 4a in umgebogenem Zustand dargestellt. Die Laschen 2, 2' sind hier derart umgebogen, dass diese Laschen 2, 2' das Kabel 30 im Verbindungselement 1 einklemmen.

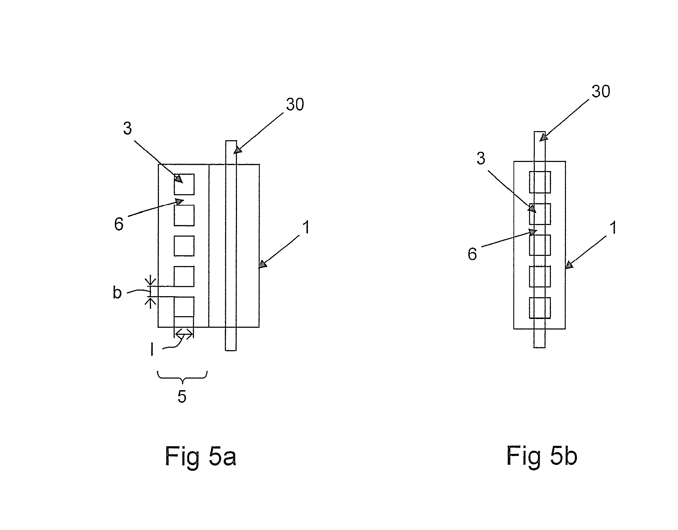

In Figur 5a ist eine alternative Ausführungsform des Verbindungselements 1 in einer Draufsicht dargestellt. Das Kabel 30 ist hier in das Verbindungselement 1 eingeführt. Der Schweissbereich 5 weist fünf Aussparungen 3 auf, sodass zwischen diesen Aussparungen 3 Stege 6 gebildet werden. Diese Stege 6 sind durch Ultraschall anregbar zu Schwingungen und weisen eine Stegbreite b und eine Steglänge 1 auf.

Die Aussparungen 3 können beispielsweise auch als Schlitze im Schweissbereich 5 ausgebildet sein, was hier aber nicht gezeigt ist.

In Figur 5b ist eine Draufsicht des Verbindungselements 1 gemäss Figur 5a in umgebogenem Zustand dargestellt. Der Schweissbereich ist dabei so umgebogen, dass die Stege 6, die hier als Stege zwischen den Aussparungen 3 ausgebildet sind, mit dem Kabel 30 in Kontakt stehen.

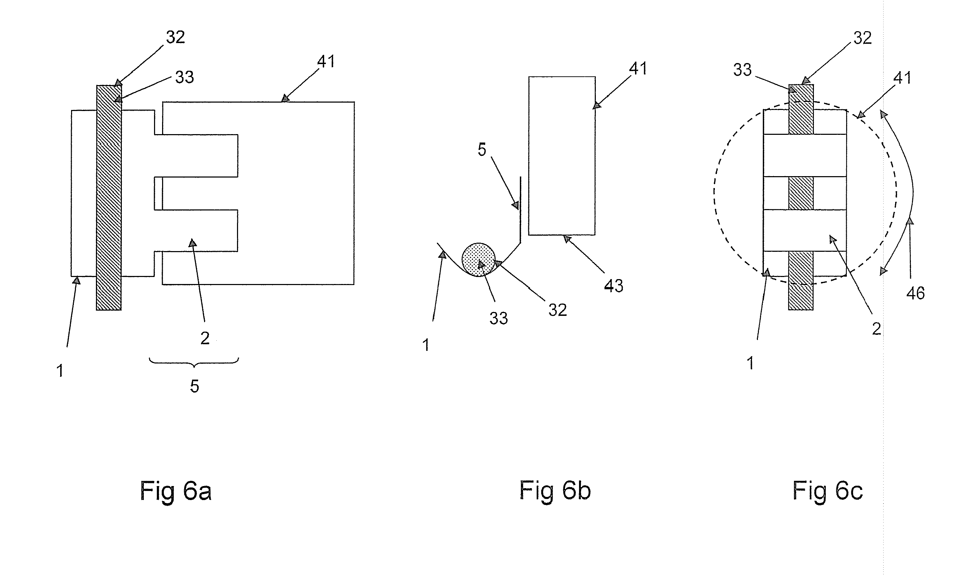

In Figur 6a ist die Draufsicht auf ein weiteres alternatives Verbindungselement 1 dargestellt, in das das Aluminiumkabel 32 bestehend aus Litzen 33 eingeführt wurde. Der Schweissbereich 5 des Verbindungselements 1 weist zwei Laschen 2 auf. Eine Sonotrode 41 ist so positioniert, dass durch eine Bewegung der Sonotrode 41 der Schweissbereich 5 mit den Laschen 2 umgebogen werden kann zur Kontaktierung des Aluminiumkabels 32.

In Figur 6b ist eine Seitenansicht entlang der Längsachse des Kabels 32 dargestellt. Das Aluminiumkabel 32 bestehend aus den Litzen 33 ist in das Verbindungselement 1 gemäss der Figur 6a eingeführt. Der Schweissbereich 5 mit den hier nicht erkennbaren Laschen, wurde mit der Sonotrode 41 umgebogen. Die Sonotrode 41 weist eine ebene Kontaktfläche 43 auf.

In Figur 6c ist eine Draufsicht auf das erfindungsgemässe Verbindungselement 1 gemäss der Figur 6a dargestellt. Der Schweissbereich, der die Laschen 2 enthält, wurde gegenüber der Figur 6a mittels der Sonotrode 41 umgebogen. Aus zeichnerischen Gründen ist die Sonotrode 41 strichliert dargestellt, um kenntlich zu machen, dass die Sonotrode 41 ansonsten zumindest teilweise das Verbindungselement 1 verdecken würde. Die Laschen 2 des Verbindungselements 1 stehen also in Kontakt mit dem Aluminiumkabel 32, das aus Litzen 33 besteht, und fixieren dieses in seiner Position. Die Sonotrode 41 steht in Kontakt mit dem Verbindungselement 1 und den Laschen 2. Die Sonotrode 41 wird hier zu torsionalen Schwingungen gemäss der indizierten Schwingungsrichtung 46 angeregt. Dadurch werden die Laschen 2 zu Schwingungen angeregt, sodass die Oxidschicht mindestens im Kontaktbereich zwischen Laschen 2 und Litzen 33 durch Abrieb entfernt wird und hier eine intermetallische Verbindung zwischen den Laschen 2 und zumindest einer Litze 33 des Aluminiumkabels 32 gebildet wird.

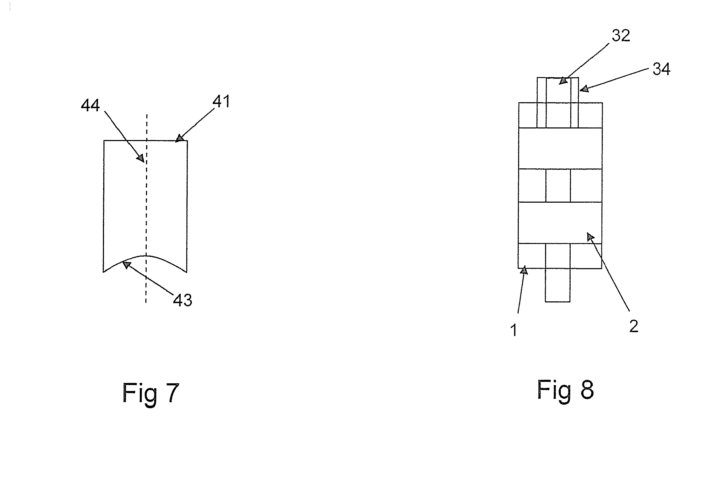

In Figur 7 ist eine Sonotrode 41 mit einer Achse 44 senkrecht zur Längsachse der Sonotrode dargestellt. Die Sonotrode 41 weist hier eine konkave Kontaktfläche 43 auf und wird zu Schwingungen senkrecht zur Achse 44 angeregt.

In Figur 8 ist eine Draufsicht auf ein weiteres erfindungsgemässes Verbindungselement 1 dargestellt. In dieses Verbindungselement 1 ist ein Aluminiumkabel 32 eingeführt, welches teilweise eine Ummantelung 34 aufweist. Die Ummantelung besteht hier aus Kunststoff. Zwei Laschen 2 des Verbindungselements 1 sind so umgebogen, dass diese das Aluminiumkabel 32 kontaktieren und im Verbindungselement einklemmen. Eine der Laschen 2 klemmt zusätzlich die Ummantelung 34 des Aluminiumkabels 32 im Verbindungselement 1 ein und fixiert dieses damit zumindest gegenüber Belastungen der Ummantelung 34 entlang der Längsachse des Aluminiumkabels 32.

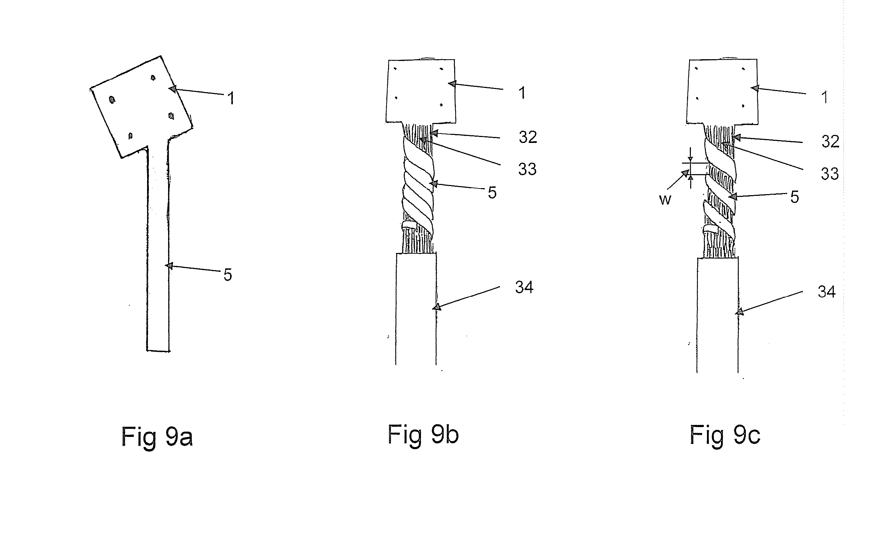

In Figur 9a ist eine Draufsicht auf ein alternatives erfindungsgemässes Verbindungselement 1 mit einem Schweissbereich 5 dargestellt. Dieser Schweissbereich 5 ist um ein Kabel umwickelbar.

In Figur 9b ist die Ausführungsform des in Figur 9a dargestellten Verbindungselements 1 gezeigt. Der Schweissbereich 5 ist um ein Aluminiumkabel 32, das aus den Litzen 33 besteht, gewickelt. Die durch den Schweissbereich 5 gebildeten Wicklungen um das Aluminiumkabel 32 sind parallel zur Längsachse des Kabels nicht voneinander beabstandet, d.h. diese berühren sich.

In Figur 9c ist die Ausführungsform der in Figur 9b dargestellten Verbindungselements 1 gezeigt. Der Schweissbereich 5 ist hier ebenfalls um ein Aluminiumkabel 32, das aus den Litzen 33 besteht, gewickelt. Die durch den Schweissbereich 5 gebildeten Wicklungen um das Aluminiumkabel 32 sind hier jedoch parallel zur Längsachse des Kabels voneinander um den Wicklungsabstand w = 1mm beabstandet, d.h. diese berühren sich nicht.

## Patentansprüche

1. Verbindungselement (1) enthaltend einen in eine Kabelaufnahme umformbaren Bereich zur Aufnahme eines Kabels (30) parallel zur Längsachse (31) des Kabels (30), mit zumindest einem biegbaren Schweissbereich (5), **dadurch gekennzeichnet, dass** der umgebogene Schweissbereich (5) derart ausgebildet ist, dass der umgebogene Schweissbereich (5) in einer Ebene parallel zur Längsachse (31) des Kabels (30) so zu Schwingungen anregbar ist, dass Ultraschallschweissen zwischen Schweissbereich (5) und Kabel (30) ermöglicht wird.

2. Verbindungselement (1) nach Anspruch 1, **dadurch gekennzeichnet, dass** der Schweissbereich (5) mindestens eine Lasche (2) aufweist.

3. Verbindungselement (1) nach Anspruch 2, **dadurch gekennzeichnet, dass** die Lasche (2) eine Laschenlänge (1) senkrecht zur Längsachse (31) des Kabels (30) hat, die grösser als die Laschenbreite (b) parallel zur Längsachse (31) des Kabels (30) ist.

4. Verbindungselement (1) nach Anspruch 2 oder 3, **dadurch gekennzeichnet, dass** der Schweissbereich (5) mindestens zwei Laschen (2), bevorzugt drei Laschen (2), besonders bevorzugt vier Laschen (2), ganz besonders bevorzugt mindestens vier Laschen (2) aufweist.

5. Verbindungselement (1) nach Anspruch 4, **dadurch gekennzeichnet, dass** die Laschen (2) ein Laschenabstand (d) zwischen zwei Laschen (2) aufweisen, der gleich gross und / oder grösser als die Laschenbreite (b) ist.

6. Verbindungselement (1) nach einem der Ansprüche 1 bis 6, **dadurch gekennzeichnet, dass** das Verbindungselement (1) mindestens zwei Schweissbereiche (5) aufweist, besonders bevorzugt genau zwei gegenüberliegende Schweissbereiche (5) .

7. Verbindungselement (1) nach Anspruch 6, **dadurch gekennzeichnet, dass** die Schweissbereiche (5) so geformt sind, dass sie wenn umgebogen, ineinander eingreifen, insbesondere dass die Laschen (2) der Schweissbereiche (5) im Wesentlichen formschlüssig ineinander eingreifen.

8. Verbindungselement (1) nach Anspruch 1, **dadurch gekennzeichnet, dass** der biegbare Schweissbereich (5) um ein Kabel (30) umwickelbar ist.

9. Verbindungselement (1) nach Anspruch 8, **dadurch gekennzeichnet, dass** der biegbare Schweissbereich (5) um ein Kabel (30) mindestens einmal, bevorzugt mindestens zweimal, ganz besonders bevorzugt zumindest dreimal umwickelbar ist.

10. Verbindungselement (1) nach Anspruch 8, **dadurch gekennzeichnet, dass** ein Wicklungsabstand (w) parallel zur Längsachse (31) des Kabels (30) wählbar ist.

11. Kabel (30) mit einem Verbindungselement (1) nach Anspruch einem der Ansprüche 1 bis 10, **dadurch gekennzeichnet, dass** der Schweissbereich (5) und das Kabel (30) zumindest teilweise mittels Ultraschallschweissen thermisch verbunden sind.

12. Kabel (30) mit einem Verbindungselement (1) nach Anspruch 11, **dadurch gekennzeichnet, dass** das Kabel (30) ein Metallkabel, insbesondere ein Aluminiumkabel (32) ist.

13. Kabel (30) mit einem Verbindungselement (1) nach Anspruch 11 oder 12, **dadurch gekennzeichnet, dass** eine Ummantelung (34) des Kabels (30) in dem Verbindungselement (1) eingeklemmt ist.

14. Vorrichtung (40) zum Ultraschallverschweissen eines Verbindungselements (1) mit einem Kabel (30), insbesondere nach einem der Ansprüche 1 bis 10, enthaltend eine Sonotrode (41) und eine Führung (42) für die Sonotrode (41), **dadurch gekennzeichnet, dass** die Sonotrode (41) derart ausgebildet und führbar ist, dass ein Schweissbereich (5) des Verbindungselements (1) mit der Sonotrode (41) so biegbar ist, dass das Kabel (30) im Verbindungselement (1) einklemmbar ist.

15. Vorrichtung (40) nach Anspruch 14, enthaltend eine Kabelaufnahme (45) **dadurch gekennzeichnet, dass** die Sonotrode (41) in einer Ebene im Wesentlichen parallel zur Achse der Kabelaufnahme (45) zu Ultraschallschwingungen anregbar ist.

16. Vorrichtung (40) nach Anspruch 14 oder 15, **dadurch gekennzeichnet, dass** eine zum Ultraschallschweissen verwendbare Kontaktfläche (43) der Sonotrode (41) parallel zur Längsachse der Sonotrode konkav ausgebildet ist.

17. Verfahren zum Verbinden eines Kabels (30) mit einem Verbindungselement (1), insbesondere mit einem Verbindungselement (1) gemäss einem der Ansprüche 1 bis 10, enthaltend zumindest einen biegbaren Schweissbereich (5), **gekennzeichnet durch** die folgenden Schritte:
- Einklemmen des Kabels (30) in dem Verbindungselement (1) **durch** Umbiegen des Schweissbereichs (5) und
- Erzeugung einer thermischen Verbindung zwischen Verbindungselement (1) und Kabel (30) **durch** Anregung des Schweissbereichs (5) mittels Ultraschall, wobei die Anregung des Schweissbereichs (5) im Wesentlichen in einer Ebene parallel zu einer Längsachse (31) des Kabels (30).

18. Verfahren nach Anspruch 17, **dadurch gekennzeichnet, dass** der Schweissbereich (5) des Verbindungselements (1) zum einklemmen des Kabels (30) mittels der Sonotrode (41) umgebogen wird.

19. Verwendung eines Verbindungselements (1) nach Anspruch 1 zum Ultraschallverschweissen eines Schweissbereichs (5) mit einem Kabel (30), wobei die Anregung des Schweissbereichs (5) zu Schwingungen im Wesentlichen in einer Ebene parallel zu einer Längsachse (31) des Kabels (30) erfolgt.
